Europäisches Patentamt

European Patent Office

Office européen des brevets

(19)

(11)     EP 0 868 104 A2

(12)                          **EUROPÄISCHE PATENTANMELDUNG**

(43) Veröffentlichungstag:
     **30.09.1998  Patentblatt 1998/40**

(51) Int. Cl.⁶: **H04Q 11/04**

(21) Anmeldenummer: **98104710.3**

(22) Anmeldetag: **16.03.1998**

(84) Benannte Vertragsstaaten:
     **AT BE CH DE DK ES FI FR GB GR IE IT LI LU MC
     NL PT SE**
     Benannte Erstreckungsstaaten:
     **AL LT LV MK RO SI**

(30) Priorität: **27.03.1997 DE 19713171
                 13.10.1997 DE 19745252**

(71) Anmelder:
     **SIEMENS AKTIENGESELLSCHAFT
     80333 München (DE)**

(72) Erfinder: **Hummel, Heinrich
     85232 Günding (DE)**

(54)    **Hierarchisch gegliedertes Kommunikationsnetz und Verfahren zum Mitteilen georgrafischer Koordinaten von Netzknoten**

(57)    Hierarchisch gegliedertes Kommunikationsnetz, bei dem jeweils mehrere Netzknoten eine Peer-Gruppe mit einem Stellvertreterknoten bilden, der wiederum mit Stellvertreterknoten anderer Peer-Gruppen eine Stellvertretergruppe einer höheren Hierarchiestufe bildet. Die Netzknoten jeder Hierarchiestufe tauschen jeweils innerhalb ihrer Gruppe Advertisement-Meldungen mit Knoteninformationen aus und speichern die empfangenen Knoteninformationen jeweils in einem Speicher ab. Ein Speicherbereich dieses Speichers ist dabei zur Speicherung von geografischen Koordinaten anderer Knoten vorgesehen. Die geografischen Koordinaten werden als Informationsgruppen innerhalb eines PNNI-Topologiezustandselementes vom Typ Knoteninformation übertragen.

FIG 1

EP 0 868 104 A2

**Beschreibung**

Die Erfindung betrifft ein hierarchisch gegliedertes Kommunikationsnetz, bestehend aus einer Vielzahl von Netzknoten, wobei jeweils mehrere Netzknoten eine Peer-Gruppe bilden und ein Repräsentant der Peer-Gruppe als deren Stellvertreterknoten mit Stellvertreterknoten anderer Peer-Gruppen eine Stellvertretergruppe von Netzknoten einer höheren Hierarchiestufe bilden, von denen ein Repräsentant als Stellvertreterknoten dieser Stellvertretergruppe in einer höheren Hierarchiestufe vertreten ist, falls eine solche höhere Hierarchiestufe vorgesehen ist, wobei Netzknoten jeder Hierarchiestufe innerhalb ihrer Gruppe jeweils Advertisement-Meldungen mit Knoteninformationen austauschen und per Advertisement-Meldung empfangene Knoteninformationen jeweils in einem Speicher speichern. Außerdem betrifft sie ein Verfahren zum Mitteilen der geografischen Koordinaten einzelner Netzknoten innerhalb einer Peer-Gruppe eines solchen Kommunikationsnetzes.

Aufgabe der Erfindung ist es, ein Kommunikationsnetz der genannten Art derart zu verbessern, daß die Gebührenabrechnung und die Leitwegsuche komfortabler ausführbar sind. Außerdem ist ein Verfahren zum Erstellen eines solchen Kommunikationsnetzes anzugeben.

Diese Aufgabe wird durch eine Kommunikationsnetz mit den Merkmalen des Anspruches 1 gelöst, bzw. durch ein Verfahren mit den Merkmalen des Anspruches 5.

Die Netzknoten eines erfindungsgemäßen Kommunikationsnetzes zeichnen sich dadurch aus, daß ein Speicherbereich des zum Speichern von empfangener Knoteninformation vorgesehenen Speichers zum Speichern einer Angabe geografischer Koordinaten anderer Knoten vorgesehen ist.

In einer besonders günstigen Ausgestaltungsform eines solchen Kommunikationsnetzes sind in dem Speicherbereich die exakten geografischen Koordinaten von Peer-Gruppen-Netzknoten gespeichert.

Eine Weiterbildung eines solchen Kommunikationsnetzes sieht vor, daß in dem Speicherbereich die geografischen Koordinaten von Nuklei von Peer-Gruppen und/oder Stellvertretergruppen gespeichert sind, die in Advertisement-Meldungen des jeweils Stellvertreterknotens der Peer-Gruppe bzw. Stellvertretergruppe mitgeteilt worden sind.

Eine günstige Ausgestaltung der letztgenannten Weiterbildung eines hierarchisch gegliedertes Kommunikationsnetzes sieht vor, daß in dem Speicherbereich als einen Stellvertreterknoten betreffende Knoteninformation neben den geografischen Koordinaten des Nukleus der Knotengruppe, deren Repräsentant dieser Stellvertreterknoten ist auch die geografischen Koordinaten der Randknoten dieser Knotengruppe enthalten sind.

Ein erfindungsgemäßes Verfahren zum Mitteilen der geografischen Koordinaten einzelner Netzknoten innerhalb einer Peer-Gruppe eines hierarchisch gegliederten Kommunikationsnetzes, das aus einer Vielzahl von Netzknoten besteht, von denen jeweils mehrere Netzknoten eine Peer-Gruppe bilden und ein Repräsentant der Peer-Gruppe als deren Stellvertreterknoten mit Stellvertreterknoten anderer Peer-Gruppen eine Stellvertretergruppe von Netzknoten einer höheren Hierarchiestufe bildet, von denen wiederum ein Repräsentant als Stellvertreterknoten dieser Stellvertretergruppe in einer höheren Hierarchiestufe vertreten ist, falls eine solche höhere Hierarchiestufe vorgesehen ist, wobei Netzknoten jeder Hierarchiestufe innerhalb ihrer Gruppe jeweils Advertisement-Meldungen mit Knoteninformationen austauschen und per Advertisement-Meldung von PNNI-Topologiezustandselementen empfangene Knoteninformationen jeweils in einem Speicher speichern, hat den Verfahrensschritt:

Übertragen von Informationsgruppen vom Typ geografische Koordinaten innerhalb des PNNI-Topologiezustandselementes vom Typ Knoteninformation.

Nachfolgend wird die Erfindung unter Bezugnahme auf die Figuren anhand von Ausführungsbeispielen näher erläutert.

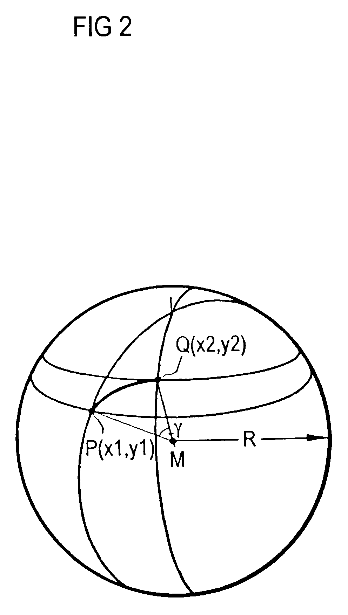

Unter Bezugnahme auf Figur 2 wird dargelegt, wie auf der Grundlage der geografischen Koordinaten (geografische Längen- und Breitenangabe) der Abstand zweier Orte auf der Erde ermittelt werden kann.

Es seien P und Q irgendwelche Netzknotenpunkte und x1,y1 bzw. x2,y2 deren geografische Längen/Breiten-Angaben.

Die Figur 2 zeigt in schematischer Darstellung eine Erdkugel mit dem Mittelpunkt M, dem Erdradius R, einen Anfangspunkt P und einen Endpunkt Q auf der Oberfläche, die die Längen- und Breitenangaben x1,y1 bzw. x2,y2 haben. Die den Koordinaten x1 und x2 zugeordneten Längenkreise sowie die den Koordinaten y1 und y2 zugeordneten Breitenkreise sind ebenfalls dargestellt.

Die Länge D(P,Q) des kürzesten auf der Oberfläche verlaufenden Weges (also der Geodäten) zwischen den Punkten P und Q, läßt sich dann beispielsweise mittels eines mit Standardmethoden der analytischen Geometrie zu gewinnenden Ausdrucks für den Winkel

$$\gamma = \angle \ PMQ =$$
$$= \arccos[\ \cos y2 \ * \ \cos y1 \ * \ \cos(x2\text{-}x1) + \sin y2 \ * \ \sin y1\ ]$$

exakt bestimmen zu

D(P, Q) = R * |$\gamma$| , falls $\gamma$ im Bogenmaß eingesetzt wird.

Die Längenangaben x1, x2 sind dabei entweder beide in westlicher- oder beide in östlicher Länge anzugeben.

EP 0 868 104 A2

Analog sind die Breitenangaben y1, y2 entweder beide in nördlicher- oder beide in südlicher Breite einzusetzen. Die Umrechnung zwischen südlicher und nördlicher Breite bzw. östlicher und westlicher Länge kann durch Vorzeichenwechsel erfolgen.

Zur Verringerung des zur Auswertung der obigen Ausdrücke notwendigen Berechnungsaufwands können mit trigonometrischen Standardmethoden alternative exakte Darstellungsformen für D(P,Q) bzw. $\gamma$ gefunden werden, wie z.B. der Ausdruck

$$\gamma = \arccos[\cos(y2-y1)^*(1-\sin^2((x1-x2)/2)) - - \cos(y2+y1)^* \sin^2((x1-x2)/2)],$$

der mit einer geringeren Anzahl rechenaufwendiger trigonometrischer Funktionsauswertungen als der zuerst angegebene auskommt.

Mittels näherungsweiser Berechnungsmethoden für die obigen Ausdrücke läßt sich der Berechnungsaufwand für D(P,Q) noch weiter verringern.

Die beschriebene Erfindung ermöglicht beispielsweise die Bestimmung der kürzesten Route beim Verbindungsaufbau in einem PNNI-artigenNetz, beispielsweise auf ATM-Basis.

Mit PNNI-artigem ATM-Netz mag sowohl ein einzelnes PNNI-Privatnetz gemeint sein, als auch der Verbund von mehreren solchen PNNI-Privatnetzen, welche ein Privatnetz-Konsortium bilden, als auch ein weltweites Netz von öffentlichen und privaten Netzen, welche eine Gesamt-PNNI-Hierarchie bilden.

Die Aufgabe besteht darin,ähnlich wie bei 1) zwischen Startknoten und Zielknoten die kürzeste Route zu ermitteln. Jedoch liegen hier zwei erhebliche Besonderheiten vor :

a) Zum einen handelt es sich um ein Netz von speziellen Knoten und Kanten, genauer um ein Netz von Knoten und Kanten gemäß des PNNI-Hierarchie-Modells des ATM Forums. Bei der Zuordnung der geografischen Koordinaten zu den jeweiligen hierarchischen PNNI-Knoten muß diese Besonderheit bedacht werden.

b) Zum anderen besitzen diese Netze ein sog. Routing-Protokoll, sprich einen software-mäßigen Selbsterkennungsprozeß, welcher jeden Netzknoten herausfinden läßt, wie das Netz physikalisch (hardwaremäßig) und logisch (im Sinne der Netzadministration) vermascht ist. Erfindungsgemäß soll dieser Prozeß benützt werden, um mit der Netztopologie auch die geografischen Koordinaten je hierarchischem Netzknoten wechselseitig zu kommunizieren.

zu a) "Geografische Koordinaten je simple node, sowie pro Nucleus und Port je complex node":
Modellgemäß gibt es hierarchisch niedrigste Knoten und hierarchisch höhere Knoten. Letztere sind eine logisch gebildete Kontraktion/Aggregation eines hierarchisch niedrigeren Teilnetzes (Peer Group), das sie repräsentieren. So kann ein hierarchisch höherer Knoten ein Teilnetz (Child Peer Group) repräsentieren, dessen Knoten stets hierarchisch niedrigste Knoten sind, sprich normale, physikalische Vermittlungsknoten. Hierarchisch höhere Knoten können abermals eine Peer Group bilden und sich in einer hierarchisch noch höheren Ebene abermals von einem einzigen Knoten repräsentieren lassen, usw.

Modellgemäß gibt es zwei Darstellungsformen für Knoten: simple nodes sowie complex nodes.
Hierarchisch niedrigste Knoten sind immer simple nodes. Hierarchisch höhere Knoten können und sollten dagegen als complexe nodes dargestellt werden, insbesondere dann, wenn sie letztlich ein großes physikalisches Teilnetz repräsentieren und deshalb die kontraktive Darstellung, als wäre dieses ein einziger Knotenpunkt, zu simplistisch ist.

Modellgemäß besitzt ein complex node einen fiktiven Mittelpunkt, genannt Nucleus, sowie Ports, sprich Identifikatoren für Randpunkte sprich Schnittstellen zu benachbarten Teilnetzen. Er besitzt ferner gewisse "Wege"-Informationen bezüglich der "Strecken" Nucleus <----> Port x oder der "Strecken" Port x ---> Port y.

Dem Nucleus als auch jedem Port eines complex node's werden erfindungsgemäß die diesbezüglichen geografischen Koordinaten zugeordnet. Damit kann z.B. mittels obiger mathematischer Formeln zu den genannten "Strecken" die diesbezüglichen Streckenlängen berechnet werden.

Das Zuordnen der geografischen Koordinaten zu den sogenannten simple nodes sowie zu Nucleus und Ports je complex node erfolgt beispielsweise wie folgt:
Beim hierarchisch niedrigsten Knoten mit selbstverständlich simple node Darstellung:
Per administrativer Konfigurierung oder vermöge des GPS werden diesem jene geografischen Koordinaten zugeordnet, welche dem geografischen Ort entsprechen, an dem dieser Knoten aufgestellt worden ist.
Beim hierarchisch höheren Knoten mit simple node Darstellung:
Ein Peer Group Leader, welcher eine child-Peer-Group in Form eines (einzigen) simplen Knotens (=Logical Group Node ; von hierarchisch höherem Level) repräsentiert, möge diesem dieselben geografischen Koordinaten zuordnen, wie sie derjenige Knoten in der genannten child-Peer-Group besitzt, welcher die Peer Group Leader Tätigkeit verrichtet.
Beim hierarchisch höheren Knoten mit complex node Darstellung:

3

Ein Peer Group Leader, welcher eine child-Peer-Group in Form eines (einzigen) komplexen Knotens (=Logical Group Node) repräsentiert, möge seinem Nucleus sowie all seinen Ports die diesbezüglichen geografischen Koordinaten zuordnen.

Geografische Koordinaten eines Ports:

Ein Port des komplexen Logical Group Nodes ist angelegt um letztlich genau einen induzierten Uplink bzw. genau einen induzierten horizontal link anzulegen. Stets aber ist der hierbei induzierte Link eine Aggregation von evtl. mehreren Uplinks, welche von einem oder mehreren Border-Knoten der Child-Peer-Group aus aufsteigen, hin zu ein und demselben Upnode führen, und obendrein das identische Aggregation Token als Kennzeichnung besitzen.

Eine unabhängige Erfindung ist in einem Verfahren zu sehen, das die geografischen Koordinaten eines Portes eines komplexen Logical Group Nodes basierend auf den geografischen Koordinaten der eben genannten Border-Knoten bestimmt. Dies könnte z.B. durch Mittelwertbildung geschehen.

Geografische Koordinaten des Nucleus:

Eine unabhängige erfindung ist in einem Verfahren zu sehen, das die geografischen Koordinaten des Nucleus eines komplexen Logical Group Node basierend auf den geografischen Koordinaten all seiner Ports bestimmt. Dies kann beispielsweise durch Mittelwertbildung geschehen.

zu b) Advertisement der geografischen Koordinaten:

Eine unabhängige Erfindung ist in einem Verfahren zu sehen, das diese geografischen Koordinaten samt richtiger Zuordnung "advertisiert" d.h. sie per PNNI-Routing-Protocoll mittels gewisser prinzipiell bekannter Datenpakete, den sog. PTSEs (PNNI-Topology-State-Elements), zwischen den Knoten ein und derselben "Peer Group" verbreitet.

Per PNNI-Routing Protocol mögen, wie gesagt, u.a. auch die geografischen Koordinaten all dieser Knoten und Ports in geeigneter Form "advertised" werden - etwa wie folgt:

Die PTSEs vom Type "Nodal Information" mögen ein oder mehrere Information Groups von einem neu zu standardisierenden Type = "Geographical Coordinates" enthalten:

| | |
|---|---|
| Type=64 (which means PTSE ) | 22 octet |

| | |
|---|---|
| Length (i.e. number of following bytes down to the end ) | 2 octets |

| | |
|---|---|
| PTSE Type= Nodal Information = 97 | 2 octet |

| | |
|---|---|
| Length | 2 octets |
| ATM Address of Switching System that implements this node | 20 octets |
| Leadership Priority | 1 octet |
| Nodal Flags | 1 octet |
| Preferred Peer Group Leader's NODE ID | 22 octets |

| | |
|---|---|
| Type=192 =Next Higher Level Binding Info | 2 octets |
| Length | 2 octets |
| Parent Logical group node ID | 22 octets |
| Parent LGN's ATM End System Address | 20 octets |
| Parent Peer Group ID | 14 octets |
| Node ID of PGL of parent peer group | 22 octets |
| Type= ?? "geographical coordinates" | |
| Length | 2 octets |

**see details below**

....beispielsweise in der folgenden unmittelbaren Gestalt:

| Type= "Geographical Coordinates"= a value defined by a standartisation Group (2 |
| :--- |
| Length = 10                                                        (2 Byte) |
| Port number                                                     2 Bytes<br>(Port number 0 indicates Nucleus if node is complex<br> Port number 0 indicates the entire node if node is simple) |
| Longitude : west=0, east=1                                (1 Byte) |
| Longitude: Degree within  Integer-Range 0-180        (1Byte) |
| Longitude: Minute  within Integer-Range 0-60         (1Byte) |
| Longitude: Second  within Integer-Range 0-60         (1Byte) |
| Latitude : north=0, south=1                              (1 Byte) |
| Latitude: Degree within Integer-Range 0-90          (1Byte) |
| Latitude: Minute  within Integer-Range 0-60 (1Byte) |
| Latitude: Second  within Integer-Range 0-60 (1Byte) |

Eine proprietäre Variante kann folgendermaßen aussehen. Das Nodal Information Group würde genau eine Systems Capability information group enthalten, welches wiederum ein oder mehrere Geografical Coordinate information groups enthalten könnte -wie folgt:

| Type= "Systems Capabilities"=640                      2 octets |
| :--- |
| Length                                                              2 octets |
| IEEE OUI of  Siemens=  08 00 06                       3  octets |
| Type= "Geographical Coordinates"= a value defined by the Producer          (2 Byte) |
| Length = 10                                                        (2 Byte) |
| Port Number                                                    2 octets<br>(Value "0" indicates Nucleus of complex node or simple node) |
| Longitude : west=0, east=1                                (1 Byte) |
| Longitude: Degree within  Integer-Range 0-180       (1Byte) |
| Longitude: Minute  within Integer-Range 0-60        (1Byte) |
| Longitude: Second  within Integer-Range 0-60        (1Byte) |
| Latitude : north=0, south=1                              (1 Byte) |
| Latitude: Degree within Integer-Range 0-90          (1Byte) |
| Latitude: Minute  within Integer-Range 0-60 (1Byte) |
| Latitude: Second  within Integer-Range 0-60 (1Byte) |
| 1 Spare Byte |

Ein erfindungsgemäßes Netz ermöglicht auch das Bestimmen der kürzesten Route:

Das PNNI-Routing Protocol, mitunter auch Advertisement Protocol genannt, bewirkt daß jeder Switch eine sog. Topology Database anlegt, in welcher das Topologie-Wissen bezüglich des für ihn sichtbaren Hierarchischen PNNI-Netzes enthalten ist - erfindungsgemäß inklusive der geografischen Koordinaten der einzelnen Knoten und Ports. Von der Topology Database läßt sich ein geeigneter, gerichteter Topologiegraph ableiten, bestehend aus a) simplen Knoten, Nucleus Knoten und Port-Knoten, sowie b) ausschließlich uni-direktionalen Kanten. Den dabei auftetenden Kanten mögen Kantenlängen-Angaben zugeordnet werden, welche man anhand der obigen mathematischen Formeln basierend auf den geografischen Koordinaten der diesbezüglichen Begrenzungsknoten berechnet.

Eine unabhängige Erfindung ist in einem Verfahren zu sehen, das basierend auf diesen geografischen Koordinaten die Längen aller Kanten berechnet, daraufhin per Dijkstra-Routing Algorithmus die kürzeste Route zu ermitteln und daraus eine entsprechende Source Routing Beschreibung (DTL-stack) ableitet, welche der Verbindungsaufbaumeldung mitgegeben werden kann.

Hierfür gibt es 2 alternative Routing-Strategien und Lösungen.

(1) Prinzip der entfernungsmäßig kürzesten Route strikt einhalten: Die (wie beschrieben) vom Startknoten bestimmte Route wird die kürzest mögliche sein. In diesem Sinne sind somit die Endpunkte der Route-Abschnitte bestimmt, welche in den einzelnen DTLs des DTL-stacks beschrieben sind. Insbesondere ist im stack-obersten DTL der kürzeste Routeabschnitt zwischen Startknoten und jenem Exit-Border-Switch beschrieben, bei dem der call die Peer Group verlassen soll, welcher der Startknoten selbst angehört. Wann immer die Verbindungsaufmeldung in eine andere Peer Group eintritt, so ist in Übereinstimmung mit den noch vorhanden hierarchisch höheren DTLs ein weiterer Route-Abschnitt zu bestimmen - und zwar erneut nach dem Prinzip der kürzesten Entfernung.

(2) Das Prinzip der kürzesten Entfernung koppeln mit anderem Prinzip:
Der Startknoten ermittelt zunächst einen DTL-stack nach dem Prinzip der kürzesten Entfernung.
Es werden alle ermittelten DTLs unverändert in die Verbindungsaufbaumeldung übernommen mit Ausnahme des stackobersten. Von diesem wird lediglich die erste Information sprich die NODE ID des Startknotens übernommen, sowie die beiden letzten Informationen, sprich NODE ID plus PORT ID, welche den Exit-Border-Switch sowie die externe Leitung identifizieren, über den/die die Peer Group verlassen werden soll. Anschließend wird eine beste Route nach einem (gewünschten) anderen Prinzip (z.B. minimalster Cell Transfer Delay oder minimalste Cell Delay Variation) berechnet, beginnend beim Startknoten und endend bei dem eben erwähnten Exit-Border-Switch. Entsprechend wird das Mittelstück des stackobersten DTLs ergänzt bzw. überschrieben.

Wann immer die Verbindungsaufbaumeldung in eine weitere Peer Group eintritt, so möge der jeweils nächste Route-Abschnitt gemäß des gewünschten Prinzips (z.B. kleinster Cell Transfer Delay) ermittelt werden und der DTL-stack dementsprechend aufgefüllt werden. Die Endpunkte dieser Route-Abschnitte bleiben jedoch verbindlich: Sie sind nach dem Prinzip der kürzesten Entfernung festgelegt worden.

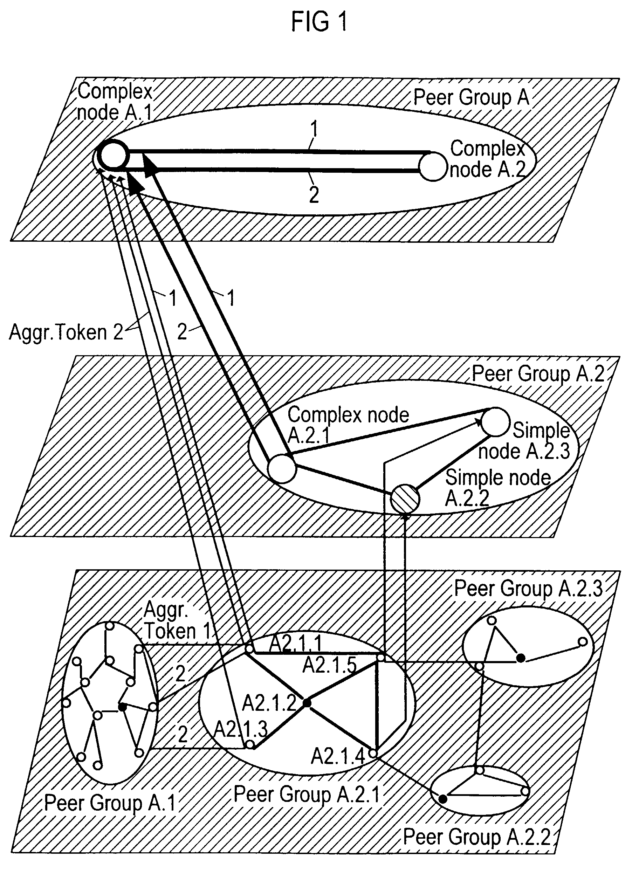

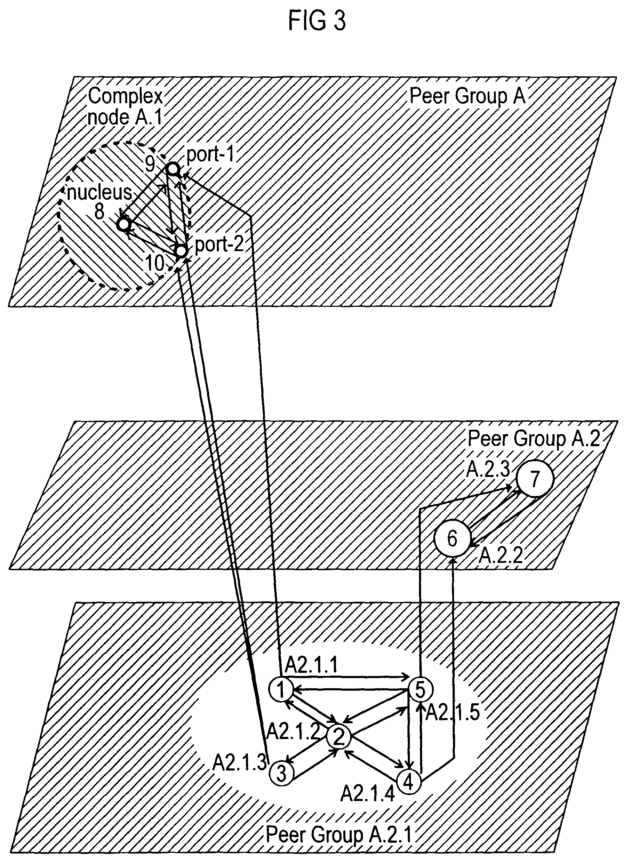

Hat beispielsweise jeder Switch der Peer Group A.2.1, sprich z.B. der Switch A.2.1.5 in Figur 1, die in Figur 1 gezeigte Sicht bzgl des Netzes, dann kann der folgende Topologiegraph für seine Dijkstra-Route-Berechnung daraus abgeleitet werden. Es sind seine Ancestor-Knoten (= Knoten A.2.1 sowie A.2) samt Berührungskanten dabei entfernt worden, da die von ihnen repräsentierte Information von gewissen im Graph verbliebenen Knoten und Kanten bereits (und zwar detaillierter) repräsentiert wird. Siehe hierzu Figur 3.

In Figur 3 sind Knoten 1,2,3,4 und 5 simple hierarchisch niedrigste Knoten . Knoten 6 und 7 sind simple Logical Group Nodes. Knoten 8 ist der Nucleus eines komplexen Knotens. Knoten 9 und 10 sind Ports eines komplexen Knotens.

Für jede im Graph verbliebenen (gerichteten) Kante werde dessen Kantenlänge berechnet und zugeordnet, dank obiger mathematischer Formeln, basierend auf den geografischen Koordinaten seiner Begrenzungs-knoten. Der Dijkstra-Routing-Algorithmus wird alsdann aufgerufen um vom Startknoten (A.2.1.5) hin zu irgendeinem vorgegebenen Zielknoten die kürzeste Route zu berechnen.

Weitere Anwendungen eines Netzes der Haupterfindung sind beispielsweise

a) Gebührenabrechnung und Gesprächsdatenaufzeichnung:

sowohl gegenüber Kunden, als auch für die wechselseitigen Gebührenverrechnungen zwischen mehreren Netzbetreibern.

b) Gerechtere Vergebührung: Wenn jedes Netz derart exakt seine eigene Leistung sprich dier Länge der Übertragungsstrecke feststellen kann (ohne umständliche administrative Einstellungen), so fällt es technisch leicht,wesentlich mehr Entfernungszonen als heutzutage üblich bzgl. der Vergebührung vorzugeben.
Beispiel: Nach jeweils weiteren 100 km beginnt die nächste Entfernungszone.

c) "Sammeln von Meilen"-Programme ähnlich wie beim Flugverkehr.

**Patentansprüche**

1. Hierarchisch gegliedertes Kommunikationsnetz, bestehend aus einer Vielzahl von Netzknoten, wobei jeweils mehrere Netzknoten eine Peer-Gruppe bilden und ein Repräsentant der Peer-Gruppe als deren Stellvertreterknoten mit Stellvertreterknoten anderer Peer-Gruppen eine Stellvertretergruppe von Netzknoten einer höheren Hierarchiestufe bilden, von denen ein Repräsentant als Stellvertreterknoten dieser Stellvertretergruppe in einer höheren Hierarchiestufe vertreten ist, falls eine solche höhere Hierarchiestufe vorgesehen ist, wobei Netzknoten jeder Hierarchiestufe innerhalb ihrer Gruppe jeweils Advertisement-Meldungen mit Knoteninformationen austauschen und per Advertisement-Meldung empfangene Knoteninformationen jeweils in einem Speicher speichern, dadurch **gekennzeichnet**, daß ein Speicherbereich des zum Speichern von empfangener Knoteninformation vorgesehenen Speichers zum Speichern einer Angabe geografischer Koordinaten anderer Knoten vorgesehen ist.

2. Hierarchisch gegliedertes Kommunikationsnetz nach Anspruch 1, dadurch **gekennzeichnet**, daß in dem Speicherbereich die exakten geografischen Koordinaten von Peer-Gruppen-Netzknoten gespeichert sind.

3. Hierarchisch gegliedertes Kommunikationsnetz nach einem der vorhergehenden Ansprüche, dadurch **gekennzeichnet**, daß in dem Speicherbereich die geografischen Koordinaten von Nuklei von Peer-Gruppen und/oder Stellvertretergruppen gespeichert sind, die in Advertisement-Meldungen des jeweils Stellvertreterknotens der Peer-Gruppe bzw. Stellvertretergruppe mitgeteilt worden sind.

4. Hierarchisch gegliedertes Kommunikationsnetz nach Anspruch 3, dadurch **gekennzeichnet**, daß in dem Speicherbereich als einen Stellvertreterknoten betreffende Knoteninformation neben den geografischen Koordinaten des Nukleus der Knotengruppe, deren Repräsentant dieser Stellvertreterknoten ist auch die geografischen Koordinaten der Randknoten dieser Knotengruppe enthalten sind.

5. Verfahren zum Mitteilen der geografischen Koordinaten einzelner Netzknoten innerhalb einer Peer-Gruppe eines hierarchisch gegliederten Kommunikationsnetzes, das aus einer Vielzahl von Netzknoten besteht, von denen jeweils mehrere Netzknoten eine Peer-Gruppe bilden und ein Repräsentant der Peer-Gruppe als deren Stellvertreterknoten mit Stellvertreterknoten anderer Peer-Gruppen eine Stellvertretergruppe von Netzknoten einer höheren Hierarchiestufe bildet, von denen wiederum ein Repräsentant als Stellvertreterknoten dieser Stellvertretergruppe in einer höheren Hierarchiestufe vertreten ist, falls eine solche höhere Hierarchiestufe vorgesehen ist, wobei Netzknoten jeder Hierarchiestufe innerhalb ihrer Gruppe jeweils Advertisement-Meldungen mit Knoteninformationen austauschen und per Advertisement-Meldung von PNNI-Topologiezustandselementen empfangene Knoteninformationen jeweils in einem Speicher speichern, **gekennzeichnet** durch das Übertragen von Informationsgruppen vom Typ geografische Koordinaten innerhalb des PNNI-Topologiezustandselementes vom Typ Knoteninformation.

# FIG 1

Complex node A.1

Peer Group A

Complex node A.2

1

2

Aggr.Token 2

1

1

2

Peer Group A.2

Complex node A.2.1

Simple node A.2.3

Simple node A.2.2

Peer Group A.2.3

Aggr. Token 1

2

A2.1.1

A2.1.5

A2.1.2

A2.1.3

2

A2.1.4

Peer Group A.1

Peer Group A.2.1

Peer Group A.2.2

FIG 2

FIG 3